Europäisches Patentamt

European Patent Office

Office européen des brevets

(11) Publication number: **0 445 507 A1**

# EUROPEAN PATENT APPLICATION

(21) Application number: **91100651.8**

(22) Date of filing: **21.01.91**

(51) Int. Cl.5: **B29C 67/14**

(30) Priority: **07.03.90 NL 9000519**

(43) Date of publication of application:
**11.09.91 Bulletin 91/37**

(84) Designated Contracting States:
**CH DE ES FR GB IT LI NL**

(71) Applicant: **GENERAL ELECTRIC COMPANY**
**1 River Road**
**Schenectady, N.Y. 12151(US)**

(72) Inventor: **Catsman, Peter**
**General Electric Plastics B.V., P.O. Box 117**
**NL-4600 AC Bergen op Zoom(NL)**
Inventor: **De Jager, Marinus**
**General Electric Plastics B.V., P.O. Box 117**
**NL-4600 AC Bergen op Zoom(NL)**
Inventor: **Mayer, Klaus Dieter**
**General Electric Plastics B.V., P.O. Box 117**
**NL-4600 AC Bergen op Zoom(NL)** ·
Inventor: **Veldstra, Marc Jurrit**
**General Electric Plastics B.V., P.O. Box 117**
**NL-4600 AC Bergen op Zoom(NL)**

(74) Representative: **Schüler, Horst, Dr. et al**
**General Electric Praunheimer Landstrasse**
**50**
**W-6000 Frankfurt 90(DE)**

(54) **Method of manufacturing a fibre reinforced composite article with selectively orientated fibres.**

(57) The invention relates to a method of reinforcing a layer of material consisting of a thermoplastic synthetic resin which is reinforced with fibres which are fully or partly unoriented.

The invention deals with a process resulting in a product with improved mechanical properties obtained in that the layer of material, as well as a further layer of material consisting of thermoplastic synthetic resin and at least approximately 50% by weight of oriented fibres are heated to a temperature near or above the melting temperature or plasticising temperature of the thermoplastic synthetic resin, after which the two material layers which are laying evenly against one another are compressed so as to overlap each other at least partly.

The invention relates to a method of reinforcing a layer of material consisting of a thermoplastic synthetic resin which is reinforced with fibres which are fully or partly unoriented.

Such thermoplastic synthetic resins which are reinforced with fibres which are partly or fully unoriented and which in general comprise at most approximately 50-60% by weight of fibres, are frequently used for the manufacture of various products in which a layer of material of the thermoplastic synthetic resin which serves as a starting material and which comprises fibres which are fully or partly unoriented is first heated at a temperature to near or above the melting-point or plasticising-point of the thermoplastic synthetic resin. Such a heating may be performed, for example, in a hot-air furnace, an infrared furnace, a microwave furnace, or the like. After the layer of material serving as a starting product has thus been heated to the desired temperature, the layer of material may be moulded to the desired shape, for example, in a matrix at a high pressure. An advantage of the material used is that the material - so synthetic resin and fibres - may optionally flow in the matrix so that the layer or material forming the starting product can be moulded in a view simple manner to the desired final shape of the product in view.

EP-A-0 273 145 discloses among other the use of such material wherein the layer comprising the fibers is laminated to a fiber free outer layer to obtain a panel with a smooth glossy surface.

However, in some cases it may be a disadvantage that the rigidity and/or strength of a product thus obtained may be too restricted for the application in view. There consequently is a need for the possibility to be able to reinforce such a layer of material of a synthetic resin reinforced with fully or partly unoriented fibres.

According to the invention this can be achieved in a simple manner in that the layer of material, as well as a further layer of material consisting of thermoplastic synthetic resin and at least approximately 50% by weight of oriented fibres are heated to a temperature near or above the melting temperature or plasticising temperature of the thermoplastic synthetic resin, after which the two material layers which are laying evenly against one another are compressed so as to overlap each other at least partly.

It has been found surprisingly that in this manner a considerable improvement of the mechanical properties, for example, rigidity and strength of the eventually obtained products can be achieved in a particularly simple manner.

It is noted that in EP-A-0 344 721 there is disclosed the manufacturing of a product comprising a substantially flat wall portion and a three dimensional frame portion having a base portion that is securable to such a wall portion and one or more integrally formed portions upstanding from said wall portion. The wall portion is first prepared from one or more resin layers which are generally uniformly impregnated with an arrangement of substantially continuously extending ordered fibers, in a form such as a woven fabric, or an unidirectionally arranged array of spaced, parallel continuous fibers. Said wall portion is formed by arranging said resin layer(s) in a mold whereafter temperature and pressure are applied on the resin layer(s) for a time which is at least sufficient to form the desired wall portion.

After forming the wall portion in the desired shape at least one further resin layer generally uniformly impregnated with substantially randomly arranged reinforcing fibers is laid up on a predetermined location against a wall surface of said wall portion, and compressed perpendicularly relative to said substantially flat wall portion in a mold means defining the configuration of the three dimensional frame portion protruding from said wall portion.

EP-A-0 289 860 discloses a fiber reinforced plastic article comprising one or more reinforcing layers consisting of fibers. In order to obtain a smooth surface of the article there is used a knitted or woven textile fabric having a tufted, velvety, napped, brushed or pile surface for forming an outer layer. The vaious layers can be placed in a mould and impregnated with resin.

However neither EP-A-0 344 721 nor EP-A-0 289 680 discloses reinforcing of a material layer of resin reinforced with substantially randomly arranged fibers by combining said material layer with a further reinforced material layer which extends parallel to said first layer and abuts said layer as disclosed in the present application.

As already stated hereinbefore, starting material for the manufacture of a product will be a sheet-like layer of material which consists of a thermoplastic synthetic resin which is reinforced with at most approximately 50-60% by weight of unoriented or partly oriented fibres. A material with unoriented fibres or partly unoriented fibres and partly oriented fibres is to be understood to mean herein a material based on short and/or long arbitrarily oriented fibres and/or fibres extending along arbitrarily bent paths extending over a great length, in which said fibres are not combined in a fabric or texture. Parallel oriented fibres extending over a large length may be added, with the proviso that the fibre-reinforced synthetic resin material as a whole, so synthetic resin and fibres thus composed can flow in the matrix during the processing upon heating to a temperature near or above the melting--temperature or the plasticising temperature of the thermoplastic synthetic resin.

For the reinforcing of such a material layer, according to the invention a material layer consisting of a thermoplastic synthetic resin will be used which is reinforced with oriented fibres. The fibres used for reinforcing the various layers of material may be both organic and inorganic fibres, in many cases glass fibres.

The fibres of the material layer with oriented fibres may be provided in the form of a fabric or mats, bands or textures of fibres oriented in one direction. The fibre content may be, for example, up to 85% by weight.

The material layer consisting of thermoplastic synthetic resin and fibres may be constructed in an entirely or partly consolidated form, which means that the fibres are embedded in a thermoplastic synthetic resin entirely or only partly.

The two above-described material layers to be combined are heated to a temperature near or above the melting temperature or plasticising temperature of the thermoplastic synthetic resin, for example, while using one or the above-mentioned furnaces. It is to be noted that it is not necessary that the same thermoplastic synthetic resin is used for both material layers, provided the combining of the two material layers results in a good bonding between the various synthetic resins.

After the two material layers have been heated at the desired temperature in this manner, they may be placed together in a matrix. Depending on the endeavoured final product the material layer comprising the oriented fibres may cover the material layer reinforced with fully or partly unoriented fibres entirely or only partly and may optionally project in one or more places beyond the material layer reinforced with fully or partly unoriented fibres. It is also possible to cover the material layer reinforced with fully or partly unoriented fibres in various separate places with a material layer comprising oriented fibres. After the material layers have been placed on each other in the desired manner, the assembly may be moulded in the desired shape by means of a high-pressure press in the manner conventionally used so far for material layers reinforced with fully or partly unoriented fibres.

By heating and subsequently compressing the material layers a good embedding of the fibres in the thermoplastic synthetic resin will also be obtained if starting materials are used in which the synthetic resin and the fibre have been combined only partly in a consolidated (impregnated) form.

By using the method according to the invention, a product of a thermoplastic synthetic resin reinforced with fully or partly unoriented fibres may be reinforced locally or throughout its entire surface in a particularly simple manner.

EXAMPLE

A sheet manufactured from polypropylene with 30% by weight of unoriented glass fibres was combined with a sheet of polypropylene reinforced with 75% oriented glass fibres in such a manner that the sheet comprising the unoriented fibres was covered only partly by the sheet comprising the oriented fibres. After heating at the melting temperature of the polypropylene the assembly was compressed to form a sheet having a thickness of approximately 4 mm. The bending modulus of the final product in the area formed by the combination of the two sheets was 13,000 MPa, while the bending modulus in the area consisting exclusively of the polypropylene sheet with unoriented fibres was 4,500 MPa.

All patent (applications) mentioned herein are herewith incorporated by reference.

## Claims

1. A method of reinforcing a material layer consisting of a thermoplastic synthetic resin reinforced with fully or partly unoriented fibres, characterised in that the material layer, as well as a further material layer consisting of a thermoplastic synthetic resin and at least approximately 50% by weight of oriented fibres are heated to a temperature near or above the melting--temperature or plasticising temperature of the thermoplastic synthetic resin, after which the two material layers which are laying evenly against one another are compressed so as to overlap each other at least partly.

2. A method as claimed in Claim 1, characterised in that the material layer with fully or partly unoriented fibres comprises at most approximately 50-60% by weight of fully or partly unoriented fibres.

3. A method as claimed in Claim 1 or 2, characterised in that a further material layer is used which comprises between 60 and 85% by weight of oriented fibres.

4. A method as claimed in any of the preceding Claims, characterised in that a further material layer is provided in several spaced-apart places on the material layer comprising fully or partly unoriented fibres.

5. A method as claimed in any of the preceding Claims, characterised in that before heating, the material layer comprising oriented fibres is consolidated only partly with the thermoplastic synthetic resin.

6. A method as claimed in any of the preceding Claims, characterised in that a material layer comprising oriented fibres is provided on each side of the material layer comprising fully or partly unoriented fibres.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | EP-A-0 344 721 (PHILLIPS PETROLEUM) <br> * page 3, line 31 - page 3, line 35 * * page 3, line 44 - page 3, line 48 @ page 4, line 20 - page 4, line 40 @ page 7, line 41 - page 7, line 43 * * claim 1; figure 3 * | 1,2 | B 29 C 67/14 |
| X,D | EP-A-0 289 860 (DOW CHEMICAL) <br> * column 2, line 16 - column 2, line 25 * * column 2, line 42 - column 2, line 46 * * column 3, line 1 - column 3, line 5 @ column 3, line 25 - column 3, line 41 * * column 7, line 12 - column 7, line 37 * * claims 1,6-8,10; figures 1,2 * | 1-6 | |
| Y | GB-A-1 052 773 (AIR LOGISTICS) <br> * page 1, line 17 - page 1, line 40 * * page 2, line 40 - page 2, line 46 * * page 3, line 26 - page 3, line 38; claims 1,2; figure 4 * | 1,5 | |
| Y,D | EP-A-0 273 145 (GENERAL ELECTRIC) <br> * claims 1,3 * | 1,5 | |
| A | EP-A-0 333 602 (ETABLISSEMENT LES FILS D ¾ AUGUSTE ) <br> * column 1, line 55 - column 1, line 62 * * column 3, line 37 - column 4, line 2; claims 1-4 * | 1 | TECHNICAL FIELDS SEARCHED (Int. Cl.5) <br><br> B 29 C |
| A | FR-A-2 026 433 (ICI) <br> * claims 1,2,5 * | 1,6 | |
| A | FR-A-2 289 338 (SOCIETE NATIONALE D ¾ ETUDE ET DE CONSTRUCTION DE MOTEURS D ¾ AVIATION) <br> * the whole document * | 1,2 | |
| A,P,A | US-A-4 931 358 (L. WAHL) <br> * column 2, line 8 - column 2, line 62; claims 1,3 & EP-A-0 323 571 (BASF) * | 1-4,6 | |

The present search report has been drawn up for all claims

| Place of search | Date of completion of search | Examiner |
|---|---|---|
| The Hague | 04 June 91 | PHILPOTT G.R. |